# EUROPEAN PATENT SPECIFICATION

(11) **EP 2 986 389 B1**
(45) Date of publication and mention of the grant of the patent: **12.02.2025**
(21) Application number: 14726662.1
(22) Date of filing: 14.04.2014
(51) Int. Cl.: B02C 17/18, B02C 17/22

(54) **A METHOD OF MAKING A LIFTER BAR, A REFURBISHED LIFTER BAR AND A MOULD**
VERFAHREN ZUR HERSTELLUNG EINER HEBERSTANGE, EINER RENOVIERTEN HEBERSTANGE UND GUSSFORM
PROCÉDÉ DE FABRICATION D'UNE BARRE DE LEVAGE, BARRE DE LEVAGE RÉNOVÉE ET MOULE

(30) Priority: 15.04.2013 FI 20135365
(43) Date of publication of application: 24.02.2016
(73) Proprietor: Metso Finland Oy, 02230 Espoo (FI)
(72) Inventor: LAUERMAA, Kari, FI-40520 Jyväskylä (FI)
(74) Representative: Boco IP Oy Ab
(86) International application number: PCT/FI2014/050269
(87) International publication number: WO 2014/170542

(56) References cited:
- WO-A1-2010/017589
- WO-A1-2012/012880
- WO-A1-81/01253
- FR-A1- 2 615 412
- US-A- 3 107 867
- US-A- 5 472 148

## Description

### FIELD OF THE INVENTION

The present invention relates to a method of making a lifter bar and more particularly to a method as defined in the preamble of independent claim 1.The present invention also relates to a refurbished lifter bar as defined in the preamble of independent claim 10.

### BACKGROUND OF THE INVENTION

Grinding mills are used to process hard solid material such that the solid material is crushed into smaller pieces. The grinding mills comprise a rotatable drum having a cylindrical wall and the interior of the drum is used for processing the solid material. The interior wall of the drum is equipped with lifter bars and as the drum rotates the lifter bars lift up the solid material along the inside wall of the drum to a point where gravity causes the solid material to fall down inside the drum and by falling down the solid material is crushed. The lifter bars' function is to assist in lifting the solid material being processed up the side of the drum as it rotates. The lifter bars are typically made of rubber or elastomer so during time the lifter bars become worn and they have to be replaced by new ones. The lifter bars become worn from the wearing surface and especially from the leading face of the lifter bar, the leading face being the upstream side of the lifter bar which is at least partially facing the predetermined direction. The extent of the leading face of the lifter bar depends on the form of the lifter bar but it is the part of the lifter bar which contacts the solid material when the solid material is lifted up to the point from which it falls down. When the leading face of the lifting bar wears over time because of the continuous impact of the solid material the lifting effect becomes less and the efficiency of the grinding mill diminishes. The lifter bars may have to be replaced with new ones about every six months.

The following discussion of the prior art is intended to present the invention in an appropriate technical context and allow its significance to be properly appreciated. Unless clearly indicated to the contrary, however, reference to any prior art in the specification should not be construed as an admission that such art is widely known or forms part of the common knowledge in the field. US 2012/0181364 A1 discloses a mill liner assembly to be mounted on a shell of a grinding mill. The mill liner assembly includes shell plates and lifter bars having a mounting portion. The publication discloses a problem that while the lifter bars and shell plates become worn they have to be replaced quickly and separately and for this purpose a new way of mounting of said assembly is developed.

FR 2615412 discloses a component that consists of a base part capped on the exposed surface with a cap consisting of a wear-resistant material. The base part is produced from reactive resin which polymerises, in situ, on contact with the adjacent surface of the cap.

WO 81/01253 discloses a wear-resistant rubber product adapted to be used as, for example, a lifter in grinding mills, comprises at least two prefabricated parts interconnected with one another by means of a binder layer having a thickness of at least 2mm and consisting of in situ cast and cured polyurethane. The wear-resistant rubber product is manufactured by placing the prefabricated cured rubber parts at a distance of at least 2mm from one another and by introducing, preferably injecting a reacting urethane rubber composition with excess isocyanate groups into the gap to cause said prefabricated parts on either side of said gap to be contacted substantially simultaneously by the said urethane rubber composition.

One of the disadvantages associated with the above arrangement is that when the lifter bars become worn they have to be replaced with new ones and the old lifter bars are waste that has to be disposed. The replacement of lifter bars with new ones is a necessary but expensive part of maintenance of a grinding mill and the disposal of the worn lifter bars add costs on top of that. There is also an environmental aspect relating to the used lifter bars because over time the amount of waste material becomes quite considerable.

### BRIEF DESCRIPTION OF THE INVENTION

An object of the present invention is thus to provide a method for producing a lifter bar so as to alleviate the above disadvantages, that is to save in costs and in waste material. The objects of the invention are achieved by a method of producing a lifter bar and a refurbished lifter bar which both are characterized by what is stated in the independent claims. The preferred embodiments of the invention are disclosed in the dependent claims.

The invention is based on the idea of reusing the existing lifter bars and refurbishing them so as to minimize the waste material that is caused by the wear and tear of the lifter bars over time. Another aspect, which is not a part of the invention, is that a lifter bar having a form that is not preferable to a certain grinding mill or a certain grinding process can be change with the method according to the invention.

A method of making a lifter bar which is used in a grinding mill according to the invention comprises the following steps: providing a mould having an interior space that conforms at least partially to a predetermined form of the lifter bar used in a grinding mill, joining the mould and a base member of the lifter bar together to form a cavity defined by the base member and the interior space and filling the cavity with polymer and allowing the polymer to attach to the base member to construct a lifter bar having the predetermined form. The lifter bar for use in a grinding mill and/or the lifter bar that is that is already used in a grinding mill have a predetermined form and comprise a base member.

So the base member may be a worn lifter bar or a part of the worn lifter bar having a different form than the predetermined form such that a new wearing surface is moulded to the lifter bar to form a predetermined form to the lifter bar. So that the invention relates to a method of refurbishing a worn lifter bar which said lifter bar is being used in a grinding mill. The method comprises the step of providing a mould for moulding a new wearing surface to the lifter bar, arranging the mould and the lifter bar together such that an empty space between the lifter bar and the mould is formed, i.e. a cavity is formed by the mould and the lifter bar comprising a base member, said empty space conforming to a worn-away portion of an unused lifter bar. The method also comprises a step of filling the empty space in the mould, i.e. the interior space of the mould with a polymer such that the polymer is attached to the lifter bar to form a bond with the lifter bar for forming a refurbished lifter bar having a new wearing surface. In other words an embodiment of invention is the method of providing a refurbished lifter bar for use in a grinding mill comprising the steps of providing a mould for moulding the refurbished lifter bar which the mould having a cavity conforming to at least a portion of an unused lifter bar and filling the cavity of the mould with a polymer to form a refurbished lifter bar having a new wearing surface. A lifter bar to be refurbished has a first form, which the first form is either a form that results from the lifter bar being worn or a form that is a different form from what is wanted or preferred when being used in a grinding mill. So the method according to the invention is providing a mould for moulding a second form to the lifter bar, the second form being the predetermined form of the lifter bar. The mould can be arranged such that the mould and the lifter bar are arranged together such that at least part of the lifter bar is inside the mould and an empty space, i.e. a cavity, is formed between the lifter bar and the mould. After the step of arranging the mould and the lifter bar together a step of filling the empty space in the mould with polymer is performed. The empty space is filled with polymer such that polymer is attached to the lifter bar for forming a lifter bar having the second form, i.e. the predetermined form.

Another embodiment of the invention is that the base member may be a rail or a profile, preferably in aluminium, that connects the lifter bar to the grinding mill, especially to the cylindrical wall of the grinding mill, and the predetermined form of the lifter bar is moulded in connection with the base member such that a lifter bar having a predetermined form is achieved.

The method of making or refurbishing a lifter bar may further comprise an additional step of heat treating the moulded lifter bar, i.e. the lifter bar comprising a used lifter bar having a worn wearing surface attached with a moulded new wearing surface or the lifter bar comprising a base member such that the lifter bar is not worn but has another shape than the predetermined form and is attached with the moulded part to construct the lifter bar having the predetermined form. The mould for moulding a new wearing surface to the used lifter bar having a worn wearing surface is preferably made according to the unused lifter bar so that the new wearing surface of the refurbished lifter bar will be similar to an original one. The mould can be made of sheet metal because of the size of the new wearing surface that is moulded. This sheet metal made mould is less expensive compared to the casting moulds of complete lifter bars because the casting mould of complete lifter bars have to be made heavier and more robust. The at least part of the outer surface of the lifter bar is preferably prepared such that the contact surface for attaching a new wearing surface is accomplished by roughening at least part of the surface of the lifter bar and/or by treating the at least part of the surface of the lifter bar with some chemical. The mould is preferably attached to the used lifter bar such that at least part of the used lifter bar and especially the part of the used lifter bar having a worn wearing surface is arranged inside the mould. The mould can be attached to the used lifter bar for example by screws. When the mould is attached to the used lifter bar polymer is fed to fill the empty space in the mould such that said polymer adheres to the contact surface of the used lifter bar which is roughened and/or chemically treated or in some other way prepared to form a suitable contact area such that the moulded polymer and the wearing surface of the used lifter bar form a tight connection. The step of filling the cavity with polymer and allowing it to attach to the lifter bar forms a refurbished lifter bar having a new wearing surface. The new wearing surface forms together with the base member the lifter bar having the predetermined form.

The step of treating at least part of an outer surface of the base member, i.e. a worn lifter bar or a part of the worn lifter bar having a different form than the predetermined form or a rail or a profile, makes a contact surface to the base member for attaching the polymer to the lifter bar comprising the base member. The step of treating at least part of the outer surface of the base member comprises at least one of the following steps: drying the outer surface, heating the outer surface, roughening the outer surface and/or treating the outer surface with chemical. This way the outer surface of the base member may have more adhesive capacity the polymer to attach it.

The method may further comprise a step of applying a heat treatment to the lifter bar having the predetermined form. In other words the lifter bar having the predetermined form after moulding is further heat treated to improve the properties accomplished by the moulding. The polymer is polyurethane and it may comprise additives, such as metal particles, ceramics or carbide.

The step of providing a mould comprises a step of forming the mould from sheet metal using an unused lifter bar as a model for the mould so that the predetermined form of the lifter bar is achieved. The step of providing a mould may also comprise a step of attaching a separate reinforced surface or separate reinforced surfaces inside the mould such that the reinforced surface is to be arranged to the surface of the lifter bar having the predetermined form. In other words the reinforced surface or surfaces are arranged inside the mould such that when the polymer is fed to the mould the reinforced surface or surfaces remain in contact with the mould such that in the moulded lifter bar having the predetermined form the reinforced surface or surfaces are on the surface of the lifter bar.

A refurbished lifter bar according to the invention comprises a lifter bar having a worn wearing surface and a new wearing surface that is attached to the worn lifter bar through moulding. The new wearing surface comprises polymer, namely polyurethane. In other words the refurbished lifter bar to be used in a grinding mill comprises a worn lifter bar and a new wearing surface, said worn lifter bar and said new wearing surface being attached to each other by moulding. The refurbished lifter bar comprises a contact surface through which the worn lifter bar and the new wearing surface are bonded together to form a refurbished lifter bar. The refurbished lifter bar is moulded such that a predetermined form of the lifter bar is achieved through moulding with a mould having the predetermined form, the predetermined form being a form of an the lifter bar before it is used, in other words before it has worn.

The description also discloses a mould for producing a refurbished lifter bar for use in a grinding mill, which mould as such is not in the scope of the invention, said mould comprising a plurality of walls for connecting the mould to a worn lifter bar and for defining a cavity in co-operation with an abraded surface of the worn lifter bar, said cavity conforming to a worn-away portion of an unused lifter bar, and an opening for admitting a polymer into said cavity. So the plurality of walls connect the mould to a base member of the lifter bar, said base member of the lifter bar being either a worn lifter bar or a part of the worn lifter bar having a different form than the predetermined form such that a new wearing surface is moulded to the lifter bar to form a predetermined form to the lifter bar. The base member may also just be a rail or a profile which connects the lifter bar to the wall of the grinding mill. The plurality of walls of the mould defines an interior space and further together with the base member of the lifter bar a cavity. The interior space conforms at least partially to a predetermined form of the refurbished lifter bar, and an opening for feeding polymer into said interior space. The mould is preferably made of sheet metal. An advantage of the method and the refurbished lifter bar of the invention is that the need of new material for a new lifter bar is minimized because about half of the needed material can be taken from the used lifter bar and a profile for connecting the lifter bar to the grinding mill may already be arranged on the bottom of the used lifter bar which can be reused as well.

### BRIEF DESCRIPTION OF THE DRAWINGS

In the following the invention will be described in greater detail by means of preferred embodiments with reference to the accompanying drawings, in which
Figure 1 shows a longitudinal cross-section of a grinding mill;
Figure 2 is a view in cross-section of the grinding mill shown in Figure 1 taken at line A-A;
Figure 3 shows a typical wear profile of a lifter bar;
Figure 4 shows a mould for moulding a new wearing surface to a worn lifter bar together with said worn lifter bar;
Figure 5 shows the mould and the worn lifter bar as shown in Figure 4 such that the mould is filled with polymer; and
Figure 6 shows a mould with a reinforced surface together with the worn lifter bar.

### DETAILED DESCRIPTION OF THE INVENTION

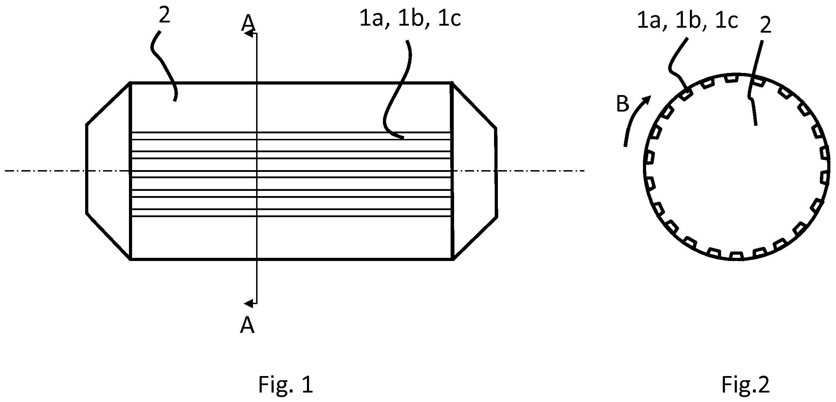

Figure 1 shows a longitudinal cross-section of a grinding mill 2 having an inner cylindrical wall which comprises lifter bars 1a, 1b, 1c attached to the cylindrical wall. Shell plates, wear plates or similar elements are preferably attached to the shell of the grinding mill in between said lifter bars 1a, 1b, 1c such that the lifter bars 1a, 1b, 1c and shell plates together protect the inner surface of the grinding mill 2 and wear is subjected to them. The grinding mill 2 rotates about its central axis in the direction indicated by arrow B in figure 2.

Figure 2 shows a view in cross-section of the grinding mill 2 shown in Figure 1 taken at line A-A. The grinding mill 2 rotates in the direction indicated by arrow B. The lifter bars 1a, 1b, 1c are arranged such that they are around the cylindrical wall of the grinding mill 2. Lifter bar 1a, 1b, 1c comprises a rail, a profile or an insert element on the bottom of the lifter bar 1a, 1b, 1c. The lifter bar 1a, 1b, 1c is secured to the shell of the grinding mill 2 with fasteners such as bolts extending from the outer surface of the grinding mill 2 to the bottom of the lifter bar 1a, 1b, 1c securing the lifter bar 1a, 1b, 1c to the interior wall of the grinding mill 2. The rail, the profile or the insert element alone can be a base member of the lifter bar such that a predetermined form of the lifter bar 1a, 1b, 1c is moulded over it or the rail, the profile or the insert element can form a part of the base member such that a worn lifter bar 1b or a part of the worn lifter bar 1b having a different form than the predetermined form forms another part of the base member. The lifter bars 1a, 1b, 1c are typically made of rubber or elastomer and attached to the inner wall of the grinding mill 2 by bolt connection. Over time the upper and/or side surface of the lifter bar 1a, 1b, 1c wears and the wearing surface becomes uneven and the solid material is not lifted upwards inside the grinding mill 2 as effectively as with the new lifter bars 1a, 1c.

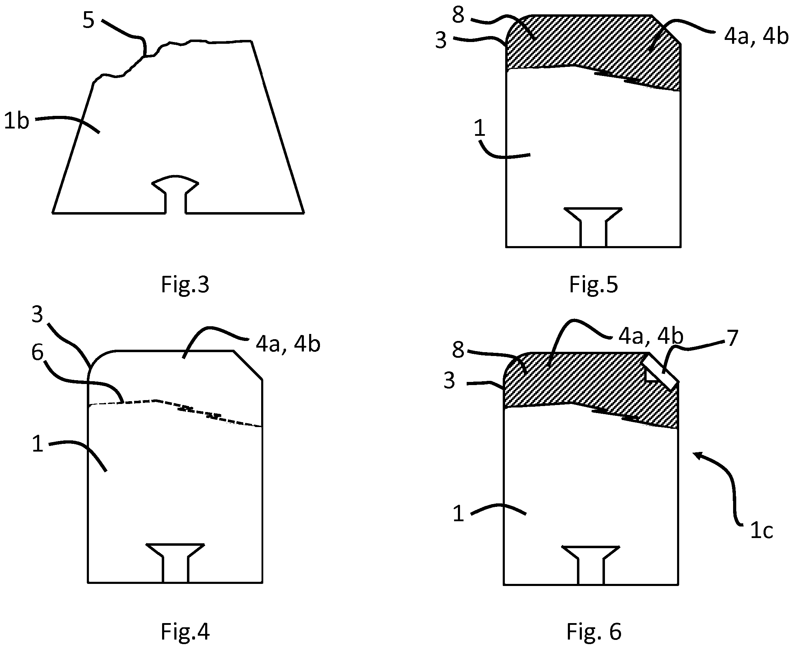

Figure 3 shows a typical wear profile of a worn lifter bar 1b. The outer surface 5 of the lifter bar 1a, 1b, 1c and especially the upper surface of the lifter bar 1a, 1b, 1c wears over time because of the impacts of the solid material that it carries and/or lifts upwards in the grinding mill 2. The upper surface comprises at least part of the top surface of the lifter bar as well as at least part of the side surface of the lifter bar which is toward the moving direction of the grinding mill 2. The outer surface 5 that wears over time is called wearing surface. As the wearing surface wears the lifting effect becomes less and the grinding mill 2 becomes ineffective and the lifter bar 1a, 1b, 1c has to be changed and replaced by a new lifter bar.

Figure 4 shows a mould 3 for moulding a new wearing surface 8 to a worn lifter bar 1b and said worn lifter bar 1b. The mould 3 is preferably made of sheet metal by bowing such that a new unused lifter bar 1a is used as a model for the mould. The mould 3 can be made according to new dimensions without having an existing lifter bar 1a as a model. The mould comprises plurality of walls for connecting the mould 3 to the base member of the lifter bar 1a, 1b, which said plurality of walls define an interior space 4a. The mould also comprises an opening (not shown in figure) for feeding polymer into said interior space 4a. When the lifter bar 1a has been in use for example six months the wearing surface of the lifter bar 1a has worn such that the lifter bar 1a, 1b, 1c has to be changed for a new one. The new lifter bar 1a can then be made by using the mould 3 for moulding a new wearing surface to the used lifter bar 1b. The aluminium profile or rail of the used lifter bar 1b from which the lifter bar is attached to the shell of the grinding mill 2 can be used again as well as the bottom part of the worn lifter bar 1b and only a new wearing surface 8 is moulded. The worn lifter bar 1b is first treated such that the new wearing surface 8 to be moulded will form a bond with the worn lifter bar 1b. The worn wearing surface is preferably heat treated such there isn't any moisture in the worn wearing surface of the worn lifter bar 1b. The worn wearing surface may also be roughened and/or chemically treated so that the chemical bond between the worn wearing surface and the new wearing surface 8 will be created. This bond is created in the contact surface 6 between the worn lifter bar 1b and the new wearing surface 8. The mould 3 is then preferably attached in a conventional way to the used worn lifter bar 1b such that at least part of the used lifter bar 1b is inside the mould 3 and such that the mould 3 and the base member of the lifter bar form a cavity 4b for the new wearing surface 8 to be moulded. The interior space 4a conforms at least partially to a predetermined form of the refurbished lifter bar 1c. Next step is to fill the cavity 4b in the mould 3 with polymer, namely polyurethane, to form a new wearing surface 8 to the lifter bar 1b. This is shown in Figure 5. Polymer can comprise ceramics and/or carbides and/or other additives to change the properties of the polymer. The polymer can also comprise metal particles. When the polymer is hardened the lifter bar having a new wearing surface 8 may be heat treated.

Figure 6 shows a mould 3 with a reinforced surface 7 for moulding a new wearing surface 4 to a worn lifter bar 1 and said worn lifter bar 1. The mould 3 can additionally comprise a reinforced surface 7 to be moulded on the wearing surface 5 of the lifter bar 1. The reinforced surface 7 is for example metal piece or some other element that stays in shape longer and doesn't wear that easily. The reinforced surface 7 may be attached to the mould 3 with a screw connection such that after the polymer is hardened and the mould 3 and the screw connection is be separated from it, the reinforced surface 7 is on the surface of the new wearing surface 4. The reinforced surface 7 may comprise fin or fins which protrude from the reinforced surface 7 inside to the wearing surface 4.

The mould for producing a refurbished lifter bar for use in a grinding mill as shown in Figures 4 to 6 comprise a plurality of walls for connecting the mould to a worn lifter bar and for defining a cavity in co-operation with an abraded surface of the worn lifter bar, said cavity conforming to a worn-away portion of an unused lifter bar, and an opening (not shown in the figures) for admitting a polymer into said cavity.

It will be obvious to a person skilled in the art that, as the technology advances, the inventive concept can be implemented in various ways. The invention and its embodiments are not limited to the examples described above but may vary within the scope of the claims.

## Claims

1. A method of making a lifter bar (1a, 1c) having a new wearing surface (8) for use in a grinding mill (2) for forming a refurbished lifter bar, the lifter bar (1a, 1c) having a predetermined form and comprising a base member of a used lifter bar and a new wearing surface (8), wherein the method comprises the steps of:
- providing a mould (3) for moulding a new wearing surface (8) to the lifter bar, the mould (3) having an interior space (4a) that conforms at least partially to the predetermined form;
- joining the mould (3) and the base member of a used lifter bar together such that an empty space, which is a cavity (4b), is formed between the base member of a used lifter bar and the mould (3); and
- filling the empty space with polyurethane and allowing the polyurethane to attach to a worn wearing surface of the base member of a used lifter bar and to form a new moulded wearing surface to construct a lifter bar (1a) having the new wearing surface (8) made of polyurethane in the predetermined form such that the base member and the new moulded wearing surface form together the refurbished lifter bar having the predetermined form,
wherein the wearing surface (8) comprises the upper surface of the lifter bar comprising at least part of the top surface of the lifter bar as well as at least part of the side surface of the lifter bar, which is toward the moving direction of the grinding mill (2).

2. A method according to claim 1, **characterized in that** the base member comprises a worn lifter bar (1b) or a part of the worn lifter bar (1b) or a lifter bar (1a) having a different form than the predetermined form.

3. A method according to any previous claims, **characterized in that** the method further comprising the step of treating at least part of an outer surface (5) of the base member such that a contact surface (6) for attaching the polyurethane to the lifter bar (1a, 1b) is arranged.

4. A method according to claim 3, **characterized in that** the step of treating at least part of the outer surface (5) of the base member comprises at least one of the following steps: drying the outer surface (5), heating the outer surface (5), roughening the outer surface (5) and/or treating the outer surface (5) with chemical.

5. A method according to any preceding claims, **characterized in that** the method further comprising the step of applying a heat treatment to the lifter bar (1a, 1c) having the predetermined form after moulding.

6. A method according to any preceding claims, **characterized in that** the polyurethane comprises additives, such as metal particles, ceramics or carbide.

7. A method according to any preceding claims, **characterized in that** the step of providing a mould (3) comprises a step of forming the mould (3) from sheet metal using an unused lifter bar (1a) as a model for the mould (3).

8. A method according to any preceding claims, **characterized in that** the step of providing a mould (3) comprises a step of attaching a separate reinforced surface (7) inside the mould (3) such that the reinforced surface (7) is to be arranged to the surface of the lifter bar (1a) having the predetermined form.

9. A method according to claim 1, **characterized in that** the base member comprises a rail or profile, preferably in aluminium, that connects the lifter bar (1) to the grinding mill (2).

10. A refurbished lifter bar (1c) to be used in a grinding mill (2), the refurbished lifter bar (1c) having a predetermined form, wherein said refurbished lifter bar (1c) comprises a worn lifter bar (1b) having a different form than the predetermined form and a new moulded wearing surface (8), the worn lifter bar (1b) forms a base member of the refurbished lifter bar (1c) to be connected to a grinding mill and the new wearing surface (8) is made of polyurethane and moulded to the worn lifter bar (1b) to form the refurbished lifter bar (1c) having the predetermined form such that the base member and the new moulded wearing surface form together the refurbished lifter bar having the predetermined form,
wherein the wearing surface (8) comprises the upper surface of the lifter bar comprising at least part of the top surface of the lifter bar as well as at least part of the side surface of the lifter bar, which is toward the moving direction of the grinding mill (2).

11. A refurbished lifter bar (1c) according to claim 10, **characterized in that** the refurbished lifter bar (1c) comprises a contact surface (6) through which the worn lifter bar (1b) and the new wearing surface (8) are bonded together to form a refurbished lifter bar (1c).

## Patentansprüche

1. Verfahren zur Herstellung einer Hebeleiste (1a, 1c) mit einer neuen Verschleißoberfläche (8) zur Verwendung in einer Mahlvorrichtung (2) zum Ausbilden einer erneuerten Hebeleiste, wobei die Hebeleiste (1a, 1c) eine vorherbestimmte Form aufweist und ein Grundelement einer gebrauchten Hebeleiste und eine neue Verschleißoberfläche (8) umfasst, wobei das Verfahren die Schritte umfasst:
- Bereitstellen eines Formwerkzeugs (3) zum Formen einer neuen Verschleißoberfläche (8) an die Hebeleiste, wobei das Formwerkzeug (3) einen Innenraum (4a) aufweist, der mindestens teilweise mit der vorherbestimmten Form übereinstimmt;
- Zusammenbringen des Formwerkzeugs (3) und des Grundelements einer gebrauchten Hebeleiste dergestalt, dass zwischen dem Grundelement einer gebrauchten Hebeleiste und dem Formwerkzeug (3) ein Leerraum, bei dem es sich um eine Kavität (4b) handelt, ausgebildet wird; und
- Füllen des Leerraums mit Polyurethan und Ermöglichen, dass das Polyurethan an einer abgenutzten Verschleißoberfläche des Grundelements einer gebrauchten Hebeleiste anhaftet und eine neue geformte Verschleißoberfläche bildet, um eine Hebeleiste (1a) mit der aus Polyurethan hergestellten neuen Verschleißoberfläche (8) in der vorherbestimmten Form dergestalt aufzubauen, dass das Grundelement und die neue geformte Verschleißoberfläche zusammen die erneuerte Hebeleiste mit der vorherbestimmten Form ausbilden,
wobei die Verschleißoberfläche (8) die Oberseite der Hebeleiste umfasst, die mindestens einen Teil der oberen Fläche der Hebeleiste sowie mindestens einen Teil der zur Bewegungsrichtung der Mahlvorrichtung (2) weisenden seitlichen Fläche der Hebeleiste umfasst.

2. Verfahren nach Anspruch 1, **gekennzeichnet dadurch, dass** das Grundelement eine abgenutzte Hebeleiste (1b) oder einen Teil der abgenutzten Hebeleiste (1b) oder eine Hebeleiste (1a) mit einer von der vorherbestimmten Form abweichenden Form aufweist.

3. Verfahren nach einem vorherigen Anspruch, **gekennzeichnet dadurch, dass** das Verfahren ferner den Schritt umfasst: Behandeln mindestens eines Teils einer Außenfläche (5) des Grundelements dergestalt, dass eine Kontaktfläche (6) zum Anhaften des Polyurethans an der Hebeleiste (1a, 1b) vorgesehen wird.

4. Verfahren nach Anspruch 3, **gekennzeichnet dadurch, dass** der Schritt zur Behandlung mindestens eines Teils der Außenfläche (5) des Grundelements mindestens einen der folgenden Schritte umfasst: Trocknen der Außenfläche (5), Erwärmen der Außenfläche (5), Aufrauen der Außenfläche (5) und/oder Behandeln der Außenfläche (5) mit einer Chemikalie.

5. Verfahren nach einem vorhergehenden Anspruch, **gekennzeichnet dadurch, dass** das Verfahren ferner den Schritt umfasst: Anwenden einer Wärmebehandlung auf die Hebeleiste (1a, 1c), die nach dem Formen die vorherbestimmte Form aufweist.

6. Verfahren nach einem vorhergehenden Anspruch, **gekennzeichnet dadurch, dass** das Polyurethan Additive wie Metallpartikel, Keramiken oder Karbid umfasst.

7. Verfahren nach einem vorhergehenden Anspruch, **gekennzeichnet dadurch, dass** der Schritt des Bereitstellens eines Formwerkzeugs (3) einen Schritt umfasst: Ausbilden des Formwerkzeugs (3) aus einem Metallblech unter Verwendung einer ungebrauchten Hebeleiste (1a) als Modell für das Formwerkzeug (3).

8. Verfahren nach einem vorhergehenden Anspruch, **gekennzeichnet dadurch, dass** der Schritt des Bereitstellens eines Formwerkzeugs (3) einen Schritt umfasst: Befestigen einer separaten verstärkten Fläche (7) im Inneren des Formwerkzeugs (3) dergestalt, dass die verstärkte Fläche (7) zur Oberfläche der Hebeleiste (1a) mit der vorherbestimmten Form hin anzuordnen ist.

9. Verfahren nach Anspruch 1, **gekennzeichnet dadurch, dass** das Grundelement eine Schiene oder ein Profil, vorzugsweise aus Aluminium, umfasst, welche(s) die Hebeleiste (1) mit der Mahlvorrichtung (2) verbindet.

10. Erneuerte Hebeleiste (1c) zur Verwendung in einer Mahlvorrichtung (2), wobei die erneuerte Hebeleiste (1c) eine vorherbestimmte Form aufweist, wobei die erneuerte Hebeleiste (1c) eine abgenutzte Hebeleiste (1b) mit einer von der vorherbestimmte Form abweichenden Form und eine neue geformte Verschleißoberfläche (8) umfasst, die abgenutzte Hebeleiste (1b) ein Grundelement der mit einer Mahlvorrichtung zu verbindenden erneuerten Hebeleiste (1c) bildet und die neue Verschleißoberfläche (8) aus Polyurethan gefertigt und an die abgenutzte Hebeleiste (1a) geformt ist, um die erneuerte Hebeleiste (1c) mit der vorherbestimmten Form dergestalt auszubilden, dass das Grundelement und die neue geformte Verschleißoberfläche zusammen die erneuerte Hebeleiste mit der vorherbestimmten Form ausbilden,
wobei die Verschleißoberfläche (8) die Oberseite der Hebeleiste umfasst, die mindestens einen Teil der oberen Fläche der Hebeleiste sowie mindestens einen Teil der zur Bewegungsrichtung der Mahlvorrichtung (2) weisenden seitlichen Fläche der Hebeleiste umfasst.

11. Erneuerte Hebeleiste (1c) nach Anspruch 10, **gekennzeichnet dadurch, dass** die erneuerte Hebeleiste (1c) eine Kontaktfläche (6) umfasst, über die die abgenutzte Hebeleiste (1b) und die neue Verschleißoberfläche (8) miteinander verbunden werden, um eine erneuerte Hebeleiste (1c) auszubilden.

## Revendications

1. Procédé de fabrication d'une barre de relevage (1a, 1c) ayant une nouvelle surface d'usure (8) pour l'utilisation dans un broyeur (2) afin de former une barre de relevage remise à neuf, ladite barre de relevage (1a, 1c) ayant une forme prédéterminée et comprenant un membre de base d'une barre de relevage usagée et une nouvelle surface d'usure (8), ledit procédé comprenant les étapes consistant à :
- fournir un moule (3) pour mouler une nouvelle surface d'usure (8) sur la barre de relevage, ledit moule (3) ayant un espace intérieur (4a) qui est au moins partiellement conforme à la forme prédéterminée;
- joindre le moule (3) et le membre de base d'une barre de relevage usagée de telle sorte qu'un espace creux, qui est une cavité (4b), est formé entre le membre de base d'une barre de relevage usagée et le moule (3); et
- remplir l'espace creux de polyuréthane et permettre au polyuréthane de s'attacher à une surface d'usure usée du membre de base d'une barre de relevage usagée et de former une nouvelle surface d'usure moulée pour construire une barre de relevage (1a) ayant la nouvelle surface d'usure (8) faite de polyuréthane dans la forme prédéterminée de telle sorte que le membre de base et la nouvelle surface d'usure moulée forment ensemble la barre de relevage remise à neuf ayant la forme prédéterminée,
dans lequel la surface d'usure (8) comprend la face supérieure de la barre de relevage comprenant au moins une partie de la surface supérieure de la barre de relevage ainsi qu'au moins une partie de la surface latérale de la barre de relevage qui est tournée vers le sens de mouvement du broyeur (2).

2. Procédé selon la revendication 1, **caractérisé en ce que** le membre de base comprend une barre de relevage usée (1b) ou une partie de la barre de relevage usée (1b) ou une barre de relevage (1a) ayant une forme différente de la forme prédéterminée.

3. Procédé selon une revendication précédente quelconque, **caractérisé en ce que** le procédé comprend également l'étape consistant à traiter au moins une partie d'une surface extérieure (5) du membre de base de telle sorte qu'une surface de contact (6) pour attacher le polyuréthane à la barre de relevage (1a, 1b) est aménagée.

4. Procédé selon la revendication 3, **caractérisé en ce que** l'étape consistant à traiter au moins une partie de la surface extérieure (5) du membre de base comprend au moins l'une des étapes suivantes : sécher la surface extérieure (5), chauffer la surface extérieure (5), rendre rugueuse la surface extérieure (5) et/ou traiter la surface extérieure (5) avec un produit chimique.

5. Procédé selon une revendication précédente quelconque, **caractérisé en ce que** le procédé comprend également l'étape consistant à appliquer un traitement thermique à la barre de relevage (1a, 1c) ayant la forme prédéterminée après moulage.

6. Procédé selon une revendication précédente quelconque, **caractérisé en ce que** le polyuréthane comprend des additifs tels que des particules métalliques, des céramiques ou le carbure.

7. Procédé selon une revendication précédente quelconque, **caractérisé en ce que** l'étape de fournir le moule (3) comprend une étape consistant à former le moule (3) à partir d'une tôle métallique en prenant une barre de relevage inutilisée (1a) comme modèle pour le moule (3).

8. Procédé selon une revendication précédente quelconque, **caractérisé en ce que** l'étape de fournir le moule (3) comprend une étape consistant à attacher une surface renforcée séparée (7) à l'intérieur du moule (31) de telle sorte que la surface renforcée (7) soit à disposer sur la surface de la barre de relevage (1a) ayant la forme prédéterminée.

9. Procédé selon la revendication 1, **caractérisé en ce que** le membre de base comprend un rail ou profilé, de préférence en aluminium, qui relie la barre de relevage (1) au broyeur (2).

10. Barre de relevage remise à neuf (1c) pour utilisation dans un broyeur (2), ladite barre de relevage remise à neuf (1c) ayant une forme prédéterminée, dans laquelle la barre de relevage remise à neuf (1c) comprend une barre de relevage usée (1b) ayant une forme différente de la forme prédéterminée et une nouvelle surface d'usure moulée (8), la barre de relevage usée (1b) forme un membre de base de la barre de relevage remise à neuf (1c) à relier à un broyeur, et la nouvelle surface d'usure (8) est faite en polyuréthane et moulée sur la barre de relevage usée (1a) pour former la barre de relevage remise à neuf (1c) ayant la forme prédéterminée de telle sorte que le membre de base et la nouvelle surface d'usure moulée forment ensemble la barre de relevage remise à neuf ayant la forme prédéterminée,
dans laquelle la surface d'usure (8) comprend la face supérieure de la barre de relevage comprenant au moins une partie de la surface supérieure de la barre de relevage ainsi qu'au moins une partie de la surface latérale de la barre de relevage qui est tournée vers le sens de mouvement du broyeur (2).

11. Barre de relevage remise à neuf (1c) selon la revendication 10, **caractérisée en ce que** la barre de relevage remise à neuf (1c) comprend une surface de contact (6) par laquelle la barre de relevage usée (1b) et la nouvelle surface d'usure (8) sont reliée l'une à l'autre pour former une barre de relevage remise à neuf (1c).
